# DEMANDE DE BREVET EUROPEEN

(11) **EP 2 154 030 A2**
(43) Date de publication de la demande: **17.02.2010**
(21) Numéro de dépôt: 09176094.2
(22) Date de dépôt: 23.12.2005
(51) Int. Cl.: B60R 19/18, B60R 21/34

(54) **Face avant pour véhicule automobile**

(30) Priorité: 30.12.2004 FR 0414089
(62) Demande divisionnaire de: 05850605.6
(71) Demandeur: VALEO SYSTEMES THERMIQUES, 78320 Le Mesnil Saint-Denis (FR)
(72) Inventeur: Guinehut, Sébastien, 92130, ISSY-LES-MOULINEAUX (FR)
(74) Mandataire: Metz, Gaëlle

(57) **Abrégé**

L'invention concerne une face avant pour véhicule automobile comportant une armature pour amortir un choc. Cette armature est une traverse supérieure (108) et ladite traverse supérieure (108) comporte un support (4) qui porte un absorbeur (6 ; 16 ; 36 ; 46 ; 56) comportant un ensemble de portions absorbantes (10, 12 ; 18, 20 ; 22, 26 ; 38 ; 48 ; 60) agencées selon une géométrie choisie de sorte que l'absorbeur (6 ; 16 ; 36 ; 46 ; 56) présente, à partir d'un seuil d'effort choisi, une raideur relative sensiblement nulle pour pouvoir se déformer sous effort sensiblement constant lors d'un choc.

Application au domaine de l'automobile.

## Description

L'invention concerne une face avant pour véhicule automobile.

Un module de face avant est un élément de structure susceptible d'intégrer divers équipements du véhicule, tels que projecteurs, clignotants, avertisseur sonore, échangeur thermique, groupe moto-ventilateur ou module de refroidissement complet, etc.

Le module, ainsi pourvu de ses équipements, constitue un élément unitaire préparé et livré par l'équipementier, prêt à être monté sur le véhicule par le constructeur. Le montage de ce module unitaire se fait par raccordement à des éléments de structure latéraux du véhicule, tels que les longerons, ailes ou coques, puis mise en place d'un pare-chocs ou bouclier frontal rapporté sur le module.

La face avant, du fait de son positionnement, est l'élément de contact qui est sollicité lors d'un choc frontal. Elle est notamment prévue pour absorber des chocs. Ces chocs sont généralement classés dans trois catégories utilisées dans les normes européennes.

La première concerne les "chocs petite vitesse", centrés, décalés ou coin, dont la vitesse est comprise entre 2,5 et 4 km/h. La deuxième catégorie concerne les "chocs moyenne vitesse", dont la vitesse est d'environ 16 km/h. Enfin, la troisième catégorie concerne les "chocs grande vitesse", dont la vitesse est comprise entre 56 et 65 km/h.

La variété de ces chocs amène les organismes gouvernementaux à mettre en place des réglementations de plus en plus strictes afin de protéger les conducteurs et leur environnement dans le cadre de ces chocs.

Les faces avant de véhicule automobile sont ainsi munies de pare-chocs destinés à absorber tout ou partie des chocs frontaux des véhicules pour protéger les passagers. Ces pare-chocs sont utilisés pour absorber les chocs avec des éléments extérieurs très variés, tels que d'autres véhicules, des murs ou des poteaux. Néanmoins, ces pare-chocs sont susceptibles de générer de sérieux dommages en cas de choc frontal avec un piéton. On observe dans ce cas que de sévères dommages sont faits au piéton, et plus particulièrement à sa jambe, (qui inclut l'ensemble fémur-genou-tibia), ainsi qu'à sa hanche ou à sa tête lorsque c'est un enfant.

Les dispositifs de l'art antérieur ne proposent pas une protection optimale de la jambe et du reste du corps du piéton qui permette d'éviter des dégâts conséquents. Ces dispositifs ne prévoient pas non plus la protection du reste du corps du piéton, telle sa hanche, qui est susceptible d'être endommagée lors d'un "choc piéton". Un choc piéton désigne l'interaction entre la partie avant d'un véhicule et la jambe (qui inclut l'ensemble fémur-genou-tibia) d'un piéton qu'il percute ainsi que sa hanche ou sa tête lorsque c'est un enfant. Notamment, ces dispositifs ne sont pas prévus pour une déformation sous effort constant.

L'invention vise à améliorer la situation.

Elle propose à cet effet une face avant comprenant une traverse supérieure formant une armature et au moins une deuxième et une troisième armatures. La traverse supérieure comporte un support qui porte un absorbeur comportant un ensemble de portions absorbantes agencées selon une géométrie choisie de sorte que l'absorbeur présente, à partir d'un seuil d'effort choisi, une raideur relative sensiblement nulle pour pouvoir se déformer sous effort sensiblement constant lors d'un choc.

Une telle face avant permet de protéger un piéton lors d'un choc piéton avec un véhicule. La protection obtenue est d'autant meilleure que l'utilisation de portions absorbantes agencées selon une géométrie choisie permet d'obtenir une déformation de ces portions sous effort constant.

Cela signifie l'absence de points durs et par conséquent une meilleure absorption de l'énergie du choc et donc une meilleure protection du piéton.

Dans une première forme de réalisation, l'absorbeur est une plaque supportant un ensemble d'ailettes formant portions absorbantes.

Dans une autre forme de réalisation, l'absorbeur est un ensemble de cellules formant portions absorbantes et comportant des parois latérales, chaque cellule comportant au moins une paroi latérale adjacente à une paroi latérale d'une autre cellule.

Dans une autre forme de réalisation, l'absorbeur est un ensemble de tubes formant portions absorbantes et comportant un axe sensiblement orthogonal au support.

D'autres modes de réalisation particuliers de l'invention proposent que:
- la plaque supporte les ailettes selon leur largeur,
- la plaque supporte les ailettes selon leur longueur,
- au moins une des cellules comporte une paroi opposée au support,
- toutes les cellules comportent une paroi opposée au support,
- les cellules présentent une section sensiblement régulière,
- la section des cellules est hexagonale,
- au moins deux des cellules présentent une section non régulière,
- la section des cellules est rectangulaire,
- les cellules sont identiques,
- les cellules forment un nid d'abeille,
- les cellules sont différentes deux à deux,
- les tubes sont creux,
- au moins un tube a une extrémité refermée,
- les tubes sont pleins,
- une matière cellulaire est disposée entre les ailettes,
- au moins une des cellules est remplie au moins en partie d'une matière cellulaire,
- au moins une cellule est remplie entièrement d'une matière cellulaire,
- toutes les cellules sont remplies entièrement d'une matière cellulaire,
- au moins un tube est rempli au moins en partie d'une matière cellulaire,
- tous les tubes sont remplis au moins en partie d'une matière cellulaire,
- tous les tubes sont remplis entièrement d'une matière cellulaire
- l'absorbeur est un ensemble de segments de soufflet disposés tête-bêche,
- les segments sont vides,
- au moins un segment est rempli au moins en partie d'une matière cellulaire,
- tous les segments sont remplis entièrement d'une matière cellulaire,
- l'absorbeur est un corps creux comportant des parois absorbantes,
- le corps creux est rempli d'un liquide,
- le support et/ou les portions absorbantes sont en matière plastique,
- la matière plastique est une matière plastique hybride.
- le support a la forme générale d'une plaque,
- les deuxièmes et troisièmes armatures sont choisies parmi le groupe comprenant une poutre pare-chocs, une poutre piéton, un jambage et un boîtier de projecteur, et
- la face avant est réalisée de manière monobloc.

Ces différentes formes de réalisation permettent de réaliser des dispositifs de protection contre les chocs à géométrie choisie. Ces différentes géométries permettent de dimensionner l'effort quasi constant sous lequel se déforme le dispositif lors d'un choc.

L'invention concerne également une face avant comprenant au moins un tel dispositif de protection contre les chocs, pouvant être réalisée de manière monobloc.

D'autres avantages et caractéristiques de l'invention apparaîtront mieux à la lecture de la description à titre illustratif et non limitatif d'exemples issus des figures sur les dessins annexés dans lesquels:
- la figure 1 représente une vue schématique en coupe partielle de côté d'une partie avant d'un véhicule intégrant un dispositif selon l'invention ;
- la figure 2 représente une vue schématique en perspective d'un absorbeur d'un dispositif selon l'invention réalisé sous forme d'architecture lamellaire ;
- les figures 2a et 2b représentent respectivement une vue de face et une vue de dessus de la figure 2 ;
- la figure 3 représente une variante du dispositif de la figure 2;
- les figures 4 à 6 représentent des vues de dessus de variantes de l'absorbeur de la figure 2 réalisées sous forme d'architecture cellulaire ;
- la figure 7 représente une vue de dessus d'une variante de l'absorbeur de la figure 2 réalisé sous forme d'architecture tubulaire ;
- la figure 8 représente une vue en perspective d'une variante de l'absorbeur de la figure 2 réalisé sous forme d'architecture à segments de soufflets ;
- la figure 9 représente une vue en perspective d'une variante de l'absorbeur de la figure 2 réalisé sous forme d'un corps creux ;
- la figure 10 est un graphe générique de l'effort transmis en fonction du déplacement par un absorbeur d'un dispositif selon l'invention ; et
- les figures 11a et 11b représentent des vues schématiques en perspective avant et arrière d'une face avant intégrant des dispositifs selon l'invention.

Dans la suite de la description, il sera fait référence à la notion d'armature. Dans le cadre de l'invention, le terme armature désigne tout élément structurel d'une face avant, que ce soit un jambage, une poutre, une traverse ou un projecteur.

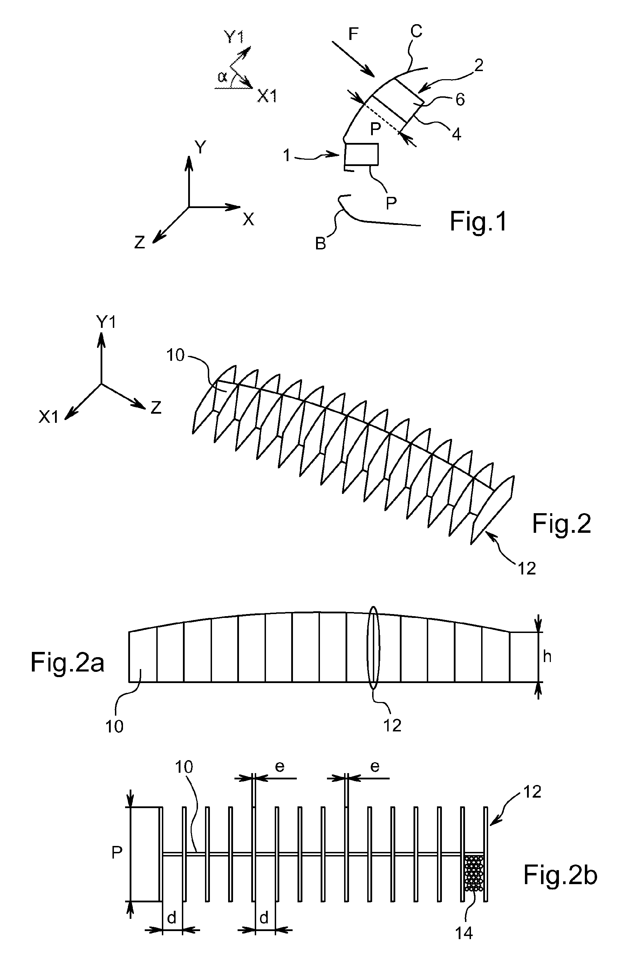

Comme on peut le voir sur la figure 1, une partie avant 1 d'un véhicule automobile comporte un dispositif de protection contre les chocs 2 situé sous un capot C, au-dessus d'une poutre pare-choc P et d'un bouclier B. Le dispositif 2 comporte un support 4 et un absorbeur 6. Un repère (X, Y, Z) est fourni. Un second repère (X1, Y1) décalé d'un angle α autour de l'axe Z par rapport au plan (X, Y) est axé selon une direction d'un choc représentée par une flèche F. L'absorbeur 6 a une profondeur p s'étendant dans la direction X1 sur au moins 140 mm.

Dans l'exemple ici décrit, le support 4 est une plaque intégrée à une armature d'une face avant, comme il sera décrit plus bas. Néanmoins, ce support pourrait être seulement rapporté sur cette armature. Le choix d'un support 4 présentant une rigidité choisie permet de piloter l'effort transmis lors d'un choc frontal une fois l'absorbeur 6 compressé.

Le support 4 peut ainsi être réalisé dans une matière plastique classique ou hybride. Par matière plastique hybride, on entend toute matière composée d'au moins deux matières distinctes ou non, dont l'une au moins est une matière plastique. Par exemple, une matière plastique hybride peut être composée de métal recouvert d'une matière plastique, ou encore le mélange de deux matières plastiques différentes.

Dans un premier mode de réalisation, l'absorbeur 6 est à architecture lamellaire.

La figure 2 montre une vue en perspective de cet absorbeur. L'absorbeur 6 comporte une plaque centrale 10 s'étendant sensiblement selon l'axe Z orthogonal au repère (X1, Y1) de la figure 1. Cette plaque 10 s'étend également selon l'axe Y1. Le long de l'axe Z, des ailettes 12 sont disposées transversalement à la plaque 10, de part et d'autre de celle-ci.

Comme on peut le voir sur la figure 2a, la plaque 10 présente un profil permettant d'épouser la forme du capot C. La figure 2b permet de voir que les ailettes 12 sont espacées de manière sensiblement régulière le long de l'axe de la plaque 10 et que celles-ci ont une épaisseur e sensiblement constante.

Dans l'exemple ici décrit, la distance d entre les ailettes 12 est de 50 mm. Les ailettes 12 sont identiques et ont chacune une largeur h d'au moins 150 mm, une longueur p de 200 mm et une épaisseur e d'un millimètre.

Les ailettes 12 sont réalisées en matière plastique choisie pour obtenir les propriétés de déformation voulue. Il est possible de disposer une matière cellulaire 14 entre les ailettes 12, comme représenté sur la figure 2b à titre d'exemple. Cette matière cellulaire est ici et pour la suite de la mousse plastique ou de la mousse métallique, et elle peut remplir partiellement ou entièrement l'espace entre les ailettes 12.

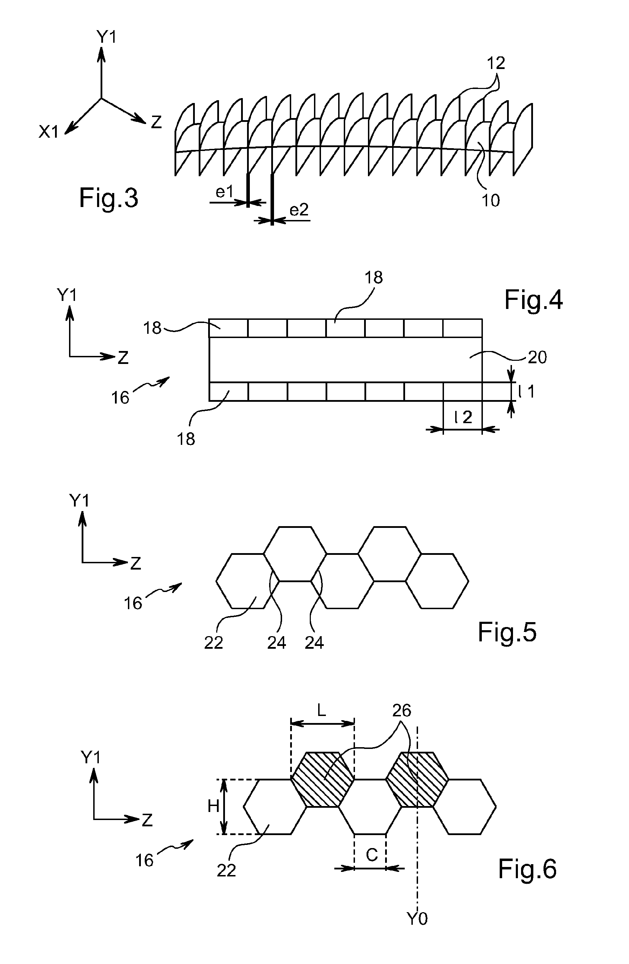

La figure 3 montre une variante de la figure 2 dans laquelle la plaque centrale 10 s'étend sensiblement dans le plan (X1, Z). Les ailettes 12 s'étendent toujours de part et d'autre de la plaque 10, mais ici selon l'axe Y1.

Dans cette forme de réalisation, l'épaisseur des ailettes 12 n'est pas constante et leur épaisseur alterne entre e1 égal 1 mm et e2 égal 2 mm.

Dans les exemples ici décrits, les ailettes s'étendent de manière sensiblement égale d'un côté et de l'autre de la plaque. Néanmoins, elles pourraient s'étendre de manière dissymétrique, voire ne s'étendre que d'un seul côté de la plaque.

En variant l'épaisseur, l'écartement, et le décalage par rapport à la plaque pour les ailettes, ainsi qu'en choisissant une matière plastique aux propriétés choisies, on peut donc obtenir une déformation sous effort constant calibré. Les ailettes et la plaque pourraient également être réalisées dans une matière plastique hybride telle que définie plus haut.

Les figures 4 à 7 représentent des variantes de l'absorbeur 6 dans lesquelles il a une architecture cellulaire. Plus précisément, cela signifie que l'absorbeur est constitué de cellules orientées sensiblement dans la même direction pouvant avoir une forme quelconque. D'autre part, la structure cellulaire peut être régulière, c'est à dire avec des cellules de même taille, ou pas.

D'une manière générale, l'ensemble des figures 4 à 7 représente des absorbeurs 16 vus dans le plan (Y1, Z) défini plus haut, les cellules les composant s'étendant donc selon la direction X1.

Sur la figure 4, l'absorbeur 16 comporte deux rangées de cellules rectangulaires 18 entre lesquelles est prévue une grande cellule 20. Les cellules 18 et 20 sont en matière plastique classique ou hybride.

L'absorbeur 16 s'étend sur toute la longueur du support 4, c'est à dire sur toute la largeur du capot C, entre des projecteurs du véhicule.

La taille des cellules 18 et de la cellule 20 est relative en fonction de l'absorption d'énergie recherchée. Dans cette configuration, la structure cellulaire est irrégulière et les cellules sont de forme sensiblement rectangulaire. Dans l'exemple ici décrit, les cellules 18 sont creuses et remplies d'une matière cellulaire, et la cellule 20 est pleine, et les cellules 18 ont des côtés de dimensions respectives 11 égale à 50 mm et 12 égale à 100 mm. Cependant, ces dimensions pourraient être différentes, par exemple supérieures. En outre, les cellules 18 et 20 pourraient être identiques, à savoir creuses et remplies ou non ou partiellement d'une matière cellulaire ou encore pleines.

La figure 5 montre une variante de la figure 4 dans laquelle l'absorbeur 16 présente une structure régulière comportant une rangée de cellules 22 hexagonales, en matière plastique classique ou hybride. Les cellules 22 sont reliées deux à deux par des côtés respectifs 24. Dans l'exemple ici décrit, ces cellules sont pleines.

La figure 6 montre une variante de la figure 5 dans laquelle les cellules 22 sont creuses. Alternativement, le dessus de ces cellules est refermé par une extrémité 26 de même forme, c'est à dire dans l'exemple ici décrit présentant une largeur totale L et une hauteur totale H de 100 mm ainsi qu'une côte C de 40 mm. Cependant, ces dimensions pourraient être différentes, par exemple supérieures. On peut donc dimensionner l'absorbeur 16 par la variation de la géométrie cellulaire, par la variation de dimension des cellules, et par la rigidification de celles-ci en la rendant pleine, creuse, remplie d'une matière cellulaire, ou encore creuse et bouchée à son extrémité.

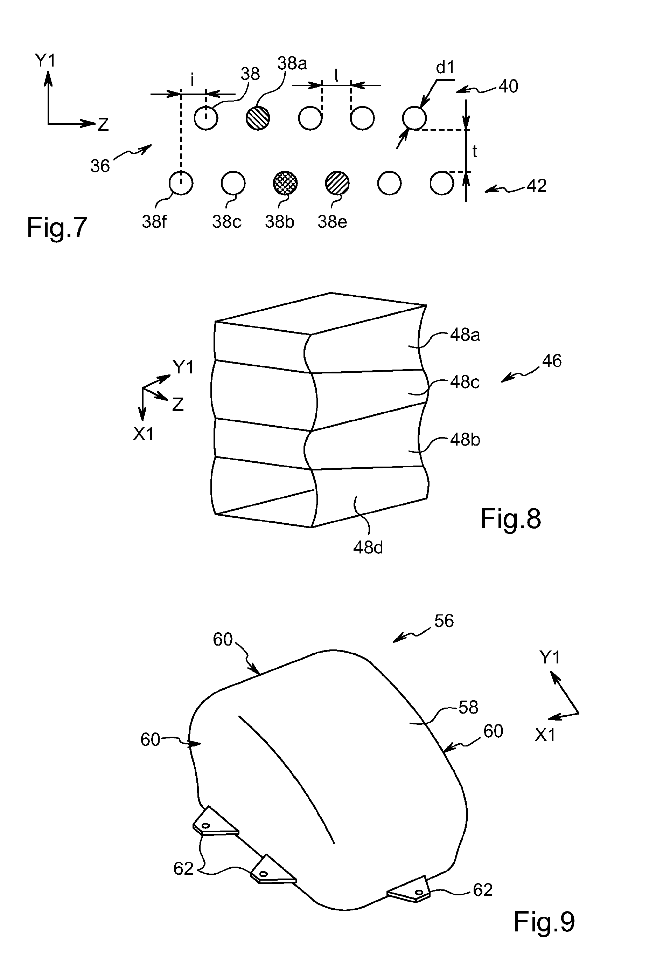

La figure 7 présente une autre forme de réalisation d'un absorbeur 36 de l'invention.

Là encore l'absorbeur 36 est représenté en coupe dans le plan (Y1, Z). L'absorbeur 36 comporte une multitude de tubes 38 en matière plastique classique ou hybride s'étendant selon la direction X1.

Les tubes 38 sont dans l'exemple ici décrits agencés selon deux rangées de tubes 40 et 42, les tubes 38 étant au sein de chaque rangée séparés d'une distance 1 ici égale à 70 mm. Cependant, cette distance pourrait être différente, par exemple supérieure.

Les deux rangées 40 et 42 sont décalées l'une par rapport à l'autre, selon l'axe Y1 d'une hauteur t égale à 100 mm et selon l'axe Z d'une distance i égale à 60 mm, de sorte que les tubes 38 de la rangée 40 et ceux de la rangée 42 ne soient pas au même niveau selon l'axe Y1. Cependant, ces distances pourraient être différentes, par exemple, supérieures.

Dans l'exemple ici décrit, les tubes présentent un diamètre d1 égal à 50 mm. Cependant, cette dimension pourrait être différente, par exemple, supérieure. Les tubes 38 de cette structure peuvent être creux 38f, pleins 38c, remplis d'une matière cellulaire entièrement 38b ou partiellement 38e ou refermés sur le haut 38a. En outre les tubes 38 pourraient être identiques, à savoir tous creux et remplis ou non ou partiellement d'une matière cellulaire ou encore pleins et recouverts ou pas.

La figure 8 présente une autre forme de réalisation d'un absorbeur 46 de l'invention. Dans cette forme de réalisation, l'absorbeur 46 est constitué d'un ensemble de segments de soufflet en matière plastique classique ou hybride, de forme générale trapézoïdal et qui sont disposés tête-bêche. Ces segments 48a, 48b, 48c, 48d sont généralement désigné par la référence numérique 48 s'étendent comme indiqué par le repère (X1, Y1, Z).

Dans l'exemple ici décrit, les segments 48 sont fermés à leur extrémité de plus faible largeur. Ces segments peuvent être creux 48d, pleins 48c, remplis d'une matière cellulaire entièrement 48b ou partiellement 48a. En outre les segments 48 pourraient être identiques, à savoir tous creux et remplis ou non ou partiellement d'une matière cellulaire ou encore pleins.

La figure 9 présente une autre forme de réalisation d'un absorbeur 56 de l'invention. Dans cette forme de réalisation, l'absorbeur 56 est constitué par un corps creux 58 en matière plastique classique ou hybride qui s'étend comme indiqué par le repère (X1, Y1). Dans l'exemple ici décrit, ce corps creux 58 comporte des parois 60 formant portions absorbantes, est fixé sur le support 4 par des pattes 62 et est rempli d'un liquide. Le corps 58 pourrait être laissé vide.

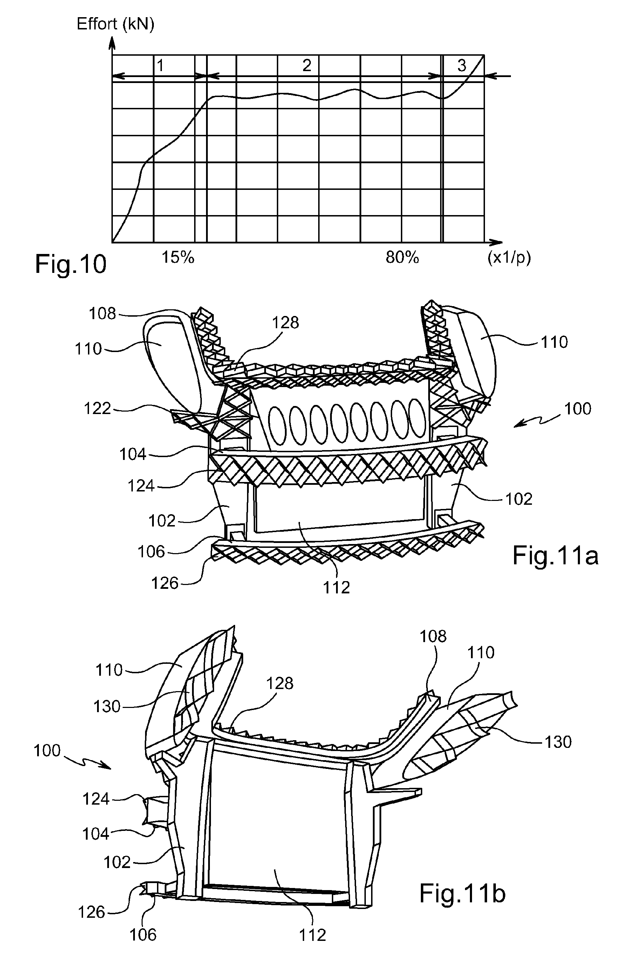

La Figure 10 illustre par une courbe l'effort transmis par un absorbeur selon l'invention suite à un choc avec un piéton. Cet effort est notamment fonction du niveau de compression de l'absorbeur suite au choc, niveau exprimé en pourcentage du rapport x1/p où x1 est l'enfoncement de l'absorbeur (en mm) et p la profondeur de l'absorbeur (en mm) mesurés dans la direction X1.

Cet effort varie selon trois zones de compression de l'absorbeur:
- une première zone dite de transition, jusqu'à environ 15%, dans laquelle l'absorbeur transmet peu d'effort, et dans laquelle l'effort transmis croit de manière sensiblement linéaire avec le niveau de compression jusqu'à atteindre un seuil d'effort choisi, par exemple 3 kN environ ;
- une deuxième zone dite de fonctionnement, jusqu'à environ 80%, dans laquelle l'absorbeur transmet un effort sensiblement constant, ici 3kN environ ;
- une troisième zone dite dure, jusqu'à environ 100%, dans laquelle l'absorbeur est fortement comprimé et finit par constituer un point dur.

Dans la première zone, l'absorbeur transmet un effort sensiblement proportionnel linéairement à son niveau de compression, ce qui signifie que l'absorbeur se comporte comme un ressort de raideur sensiblement constante. Dans la deuxième zone, l'absorbeur transmet un effort sensiblement constant, quel que soit le niveau de compression. Il offre donc une raideur apparente (ou raideur "relative") sensiblement nulle, relativement à sa raideur dans la première zone, puisque l'effort transmis n'augmente pas avec le niveau de compression. Dans la troisième zone, il présente à nouveau une raideur sensiblement constante jusqu'à atteindre la limite d'enfoncement de l'absorbeur. A cette limite, l'absorbeur ne peut plus absorber et devient un point dur dommageable pour le piéton.

Dans un mode de réalisation avantageux de l'invention, la raideur dans la première zone est choisie la plus grande possible afin de réduire la zone de transition, ce qui permet d'atteindre le seuil d'effort choisi plus rapidement. Se faisant, on élargit la deuxième zone, c'est-à-dire la zone de fonctionnement de l'absorbeur, ce qui permet d'augmenter l'énergie absorbée sous effort constant lors d'un choc avec un piéton.

L'invention vise également une face avant des véhicules automobiles comportant un ou plusieurs dispositifs selon l'invention. Les figures 11a et 11b en montrent une forme de réalisation.

Une face avant 100 comporte des jambages 102, une poutre pare-chocs 104, une poutre piéton 106, une traverse supérieure 108 et des projecteurs 110. La poutre piéton 106 et la traverse supérieure 108 sont disposées de part et d'autres de la poutre pare-chocs 104, et les jambages 102 sont disposés transversalement à leurs extrémités respectives.

A chacune de ces armatures est associé un absorbeur 122, 124, 126, 128, 130 correspondant respectivement aux jambages 102, à la poutre pare-chocs 104, à la poutre piéton 106, à la traverse supérieure 108 et aux projecteurs 110. Chacun de ces absorbeurs est dans l'exemple ici décrit à structure cellulaire quadrilatérale, mais pourrait également être selon une des architectures décrites plus haut.

Dans l'exemple ici décrit, la face avant est monobloc, c'est à dire que les éléments et les absorbeurs sont intégrés et que la face avant entière est moulée de manière monobloc. Le support du dispositif est donc ici intégré à l'armature. Ils pourraient cependant être rapporté sur celle-ci.

Pour les projecteurs, c'est leur boîtier qui est moulé en même temps que l'absorbeur 130.

La description des exemples ci-dessus est donnée à titre illustratif et non limitatif et incorpore notamment toute variante que saura imaginer l'homme du métier à partir des exemples ci-dessus, c'est à dire par exemple la réalisation d'une face avant incorporant des dispositifs contre les chocs selon des variantes différentes décrites ci-dessus.

On peut également envisager de mélanger certaines propriétés des variantes entre elles et de prévoir par exemple une structure cellulaire qui comporte des cellules pleines, des cellules creuses remplies totalement de matière cellulaire, des cellules creuses partiellement remplies de matière cellulaire, des cellules creuses et des cellules creuses fermées à leur extrémité.

Les différentes variantes d'absorbeurs décrites auparavant pourront être structurées et formées de façon à permettre le renfort et/ou l'appui d'un bouclier du véhicule automobile. Elles pourront aussi permettre le guidage de l'air.

L'homme du métier saura également envisager de réaliser plusieurs rangées de tubes ou de cellules lorsque cela s'avère nécessaire.

L'ensemble de ces variantes est à apprécier à la lumière des revendications en annexe qui suivent

## Revendications

1. Face avant pour véhicule automobile comprenant une traverse supérieure (108) formant une armature et au moins une deuxième (104) et une troisième (106) armatures, **caractérisée en ce que** ladite traverse supérieure (108) comporte un support (4) qui porte un absorbeur (6 ; 16 ; 36 ; 46 ; 56) comportant un ensemble de portions absorbantes (10, 12 ; 18, 20 ; 22, 26 ; 38 ; 48 ; 60) agencées selon une géométrie choisie de sorte que l'absorbeur (6 ; 16 ; 36 ; 46 ; 56) présente, à partir d'un seuil d'effort choisi, une raideur relative sensiblement nulle pour pouvoir se déformer sous effort sensiblement constant lors d'un choc.

2. Face avant selon l'une des revendications précédentes, **caractérisée en ce que** les deuxièmes et troisièmes armatures sont choisies parmi le groupe comprenant une poutre pare-chocs (104), une poutre piéton (106), un jambage (102) et un boîtier de projecteur (110).

3. Face avant selon la revendication 1 ou 2, **caractérisée en ce que** l'absorbeur (6) est une plaque (10) supportant un ensemble d'ailettes (12) formant portions absorbantes.

4. Face avant selon la revendication 1 ou 2, **caractérisée en ce que** l'absorbeur (16) est un ensemble de cellules (18, 20 ; 22, 26) formant portions absorbantes et comportant des parois latérales (24), chaque cellule (18, 20 ; 22, 26) comportant au moins une paroi (24) latérale adjacente à une paroi (24) latérale d'une autre cellule (18, 20 ; 22, 26).

5. Face avant selon la revendication 4, **caractérisée en ce que** les cellules forment un nid d'abeille (22, 26).

6. Face avant selon la revendication 1 ou 2, **caractérisée en ce que** l'absorbeur (36) est un ensemble de tubes (38) formant portions absorbantes et comportant un axe (X) sensiblement orthogonal au support.

7. Face avant selon la revendication 6, **caractérisée en ce que** les tubes sont pleins (38c).

8. Face avant selon la revendication 3, **caractérisée en ce qu'**une matière cellulaire est disposé entre les ailettes.

9. Face avant selon l'une des revendications 4 ou 5, **caractérisée en ce qu'**au moins une des cellules est remplie au moins en partie d'une matière cellulaire.

10. Face avant selon la revendication 6, **caractérisée en ce qu'**au moins un tube (38b) est rempli au moins en partie d'une matière cellulaire.

11. Face avant selon la revendication 1 ou 2, **caractérisée en ce que** l'absorbeur (46) est un ensemble de segments de soufflet (48) disposés tête-bêche.

12. Face avant selon la revendication 11, **caractérisée en ce que** les segments sont vides.

13. Face avant selon la revendication 12, **caractérisée en ce qu'**au moins un segment est rempli au moins en partie d'une matière cellulaire.

14. Face avant selon la revendication 1 ou 2, **caractérisée en ce que** l'absorbeur (56) est un corps creux (58) comportant des parois (60) absorbantes.

15. Face avant selon l'une des revendications précédentes, **caractérisé en ce que** le support et/ou les portions absorbantes sont en matière plastique.
